# DEMANDE DE BREVET EUROPEEN

(11) **EP 1 619 011 A1**
(43) Date de publication de la demande: **25.01.2006**
(21) Numéro de dépôt: 05300513.8
(22) Date de dépôt: 27.06.2005
(51) Int. Cl.: B30B 5/02, B62D 65/00, B29C 65/48, B29C 65/58

(54) **Outil pour plaquer un élément sur un support**

(30) Priorité: 22.07.2004 FR 0451610
(71) Demandeur: Renault SAS, 92100 Boulogne Billancourt (FR)
(72) Inventeur: Zeidan, Jaber, 78100, ST GERMAIN EN LAYE (FR)

(57) **Abrégé**

Outil (6), pour plaquer par dépression un élément (8) sur un support (10), comportant un cadre (14) dont une surface continue fermée (22) coopère de manière étanche avec une face (24,26) du support (10), caractérisé en ce que la surface continue fermée (22) comporte un passage (30) qui épouse de manière étanche un tronçon (32) de l'élément (8) qui se prolonge en dehors des limites du cadre (14).

## Description

L'invention concerne un outil pour plaquer par dépression un élément sur un support, comportant un cadre dont une surface continue fermée coopère de manière étanche avec une face du support, L'invention concerne, plus particulièrement, une baguette à plaquer sur un panneau de porte.

Les éléments doivent pouvoir être montés facilement sur un support par un opérateur, dans un temps minimal et sans risque de montage défectueux de l'élément.

Actuellement, les éléments sont montés par emboîtement ou par collage. L'emboîtement peut être, par exemple, le montage de type baïonnette. Mais il arrive que la baguette soit mal emboîtée ou se déboîte au cours du temps. La baguette, qui n'est plus bloquée, risque alors de se détacher du panneau.

Le collage est un autre type de montage possible. Au moyen d'un rouleau plaqueur, la baguette adhésive subit une force transversale. La baguette est alors collée au panneau de porte. Néanmoins, ce type de montage a une limite. Au-delà d'un certain seuil de force, le panneau de porte en tôle risque d'être déformé de manière irréversible. Les baguettes adhésives sont appliquées en respectant les contraintes de déformation de la carrosserie. Il peut donc arriver que les baguettes se décollent au cours du temps si la force appliquée n'est pas suffisante. De plus, l'élément à coller peut avoir une forme non plane ce qui ne permet pas un transfert uniforme de la pression de collage.

Dans l'état de la technique, il est également connu d'appliquer un élément sur un support par dépression. Dans le document EP0986457, un dispositif permet de coller un panneau anti-vibration sur un pavillon de véhicule automobile. Le dispositif comporte une membrane déformable entourée d'un cadre. La dépression est effectuée entre le pavillon et la membrane. Le cadre présente un joint périphérique assurant l'étanchéité autour de l'outil sur le pavillon pour effectuer le vide et plaquer le panneau anti-vibration sur le pavillon.

Mais un tel dispositif ne permet pas de coller un élément se prolongeant jusqu'à une limite d'un support telle qu'une ouverture d'un panneau de porte.

Afin de pallier ces inconvénients, l'invention a pour objet de coller un élément se prolongeant jusqu'à une limite d'un support.

A cet effet, l'invention propose un outil du type cité ci-dessus, caractérisé en ce que la surface continue fermée comporte un passage qui épouse de manière étanche un tronçon de l'élément qui se prolonge en dehors des limites du cadre.

Selon d'autres caractéristiques de l'invention, la surface continue fermée est formée par un joint d'étanchéité.
Selon d'autres caractéristiques de l'invention, qu'au moins une portion du joint d'étanchéité comporte le passage et est choisie parmi les matières plastiques tel qu'un silicone.

Selon d'autres caractéristiques de l'invention, la portion est modulaire.

Selon d'autres caractéristiques de l'invention, l'outil comporte au moins deux parties se prolongeant de part et d'autre d'une limite surfacique telle qu'une ouverture de porte.

Selon d'autres caractéristiques de l'invention, l'élément comporte une surface d'adhérence adhésive.

Selon d'autres caractéristiques de l'invention, l'élément comporte une surface d'adhérence pourvue de moyens de clipsage.

D'autres caractéristiques et avantages de l'invention apparaîtront à la lecture de la description d'exemples de réalisation d'un outil pour plaquer un élément sur une face aux figures annexées 1, 2, 3 et 4.

La figure 1 est une vue de côté d'un véhicule automobile comportant une baguette latérale fixée sur un panneau de porte par l'outil selon l'invention.

La figure 2 est une vue en coupe transversale de la figure 1 suivant la flèche 2 d'une baguette latérale fixée par l'outil selon l'invention.

La figure 3 est une vue en coupe transversale de la figure 1 selon l'axe 3-3 d'une baguette latérale fixée sur un panneau de porte par l'outil selon l'invention.

La figure 4 est une vue en perspective partielle d'une baguette latérale, d'un panneau de porte et de l'outil selon l'invention.

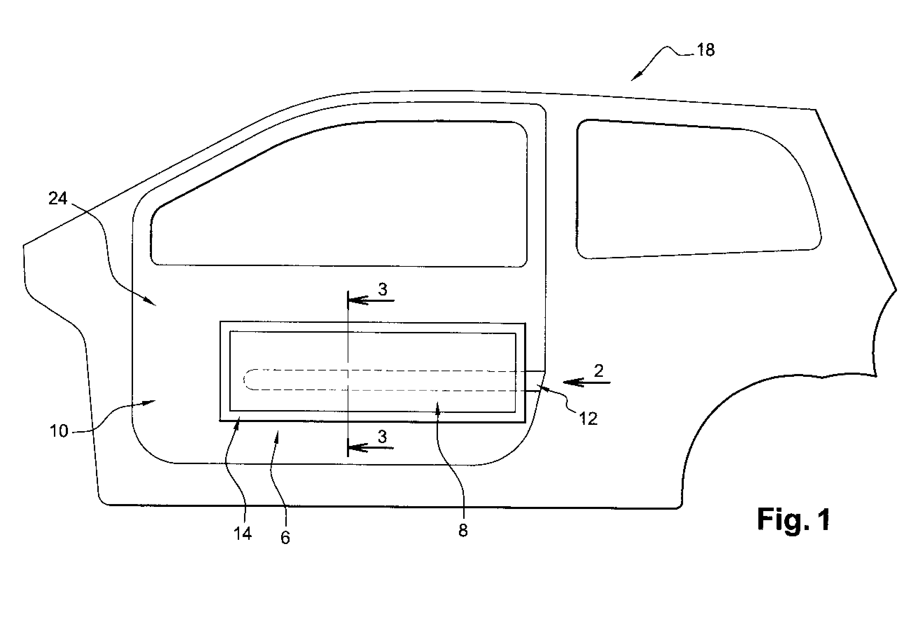

Dans la description qui suit, nous prendrons à titre non limitatif une orientation longitudinale, vertical et transversale indiquée par le trièdre L, V, T des figures 1, 2, 3 et 4.

Des éléments identiques ou analogues sont désignés par les mêmes chiffres de référence.

A l'exception des éléments spécifiques du poste de conduite, le véhicule présente une symétrie générale par rapport à un plan longitudinal médian.

Tel que représenté sur la figure 1, l'outil 6 est destiné à plaquer par dépression un élément 8 telle qu'une baguette latérale adhésive sur un support 10 tel qu'un panneau de porte de véhicule automobile 18. La baguette 8 repose à l'intérieur de l'outil 6 pour effectuer le placage et l'outil 6 est positionné sur la face extérieure 24 du panneau de porte 10. Avant d'être plaquée par l'outil 6, la baguette 8 peut être maintenue par des moyens de positionnement telles que des ventouses. Une des extrémités de la baguette 8 qui est située à proximité de l'ouverture du panneau de la porte 10, appelée l'extrémité 12, se prolonge hors de l'outil 6.

L'outil 6 comporte un cadre 14 métallique. A l'intérieur du cadre 14, une membrane 16 souple se déforme en fonction des variations de pression et épouse la forme de l'élément 8 lors du placage.

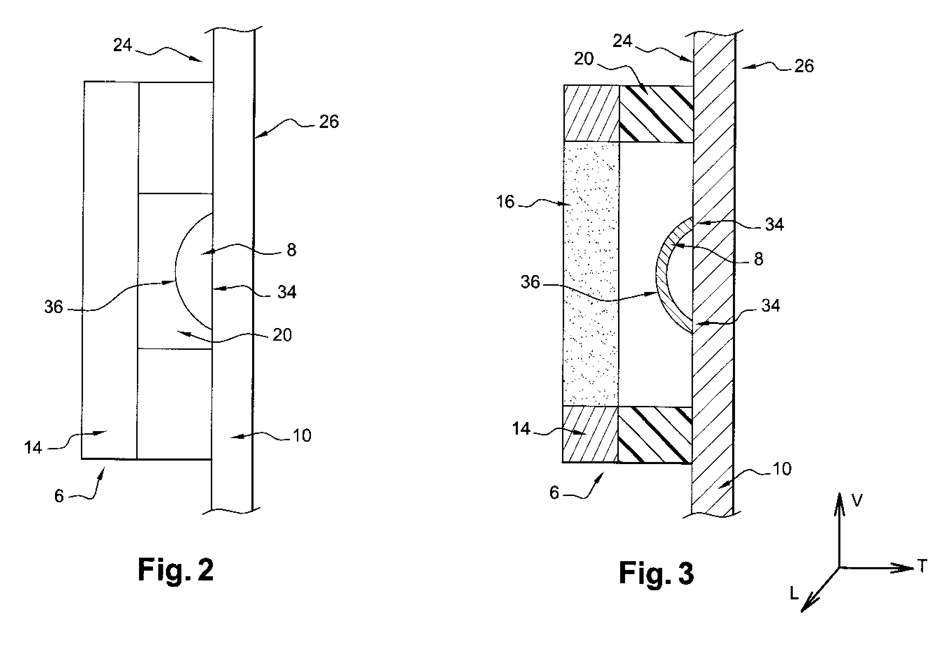

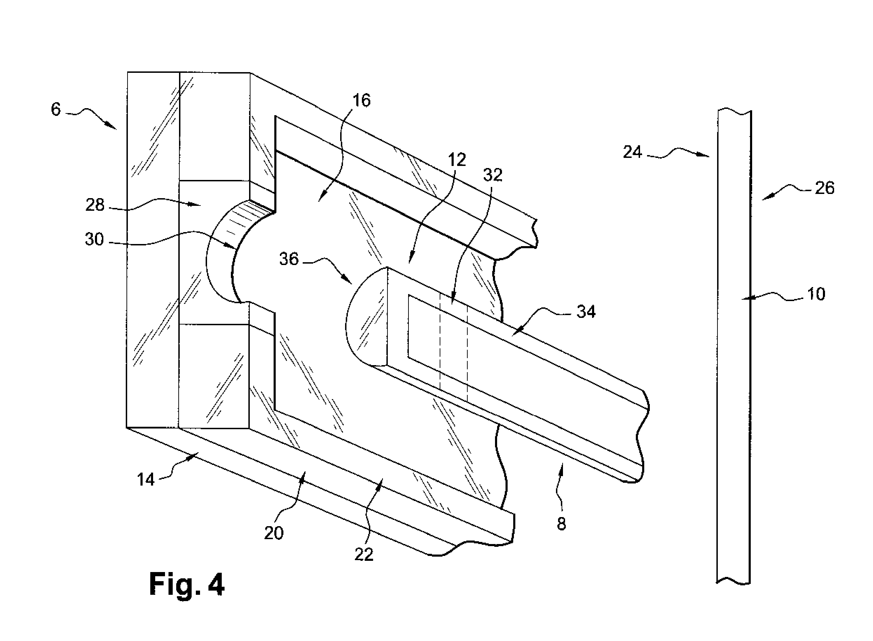

Tel que représenté sur la figure 4, le cadre 14 comporte un joint d'étanchéité 20 périphérique qui prend appui, par sa surface continue fermée 22, sur la face extérieure 24 du panneau de porte 10. Le joint d'étanchéité 20 comporte une portion 28 formant un passage 30. Cette portion 28 est dimensionnée de telle manière que sa forme est complémentaire de celle d'un tronçon 32 de la baguette 8. La baguette 8 se prolonge à travers le passage 30 laissant dépasser l'extrémité 12 hors de l'outil 6. La forme de la portion 28 épouse la forme du tronçon 32 de manière étanche, tel que représenté sur la figure 3. La portion 28 peut être, par exemple, en élastomère, en silicone. La portion 28 du joint d'étanchéité 20 est dimensionnée selon la forme d'un tronçon 32 d'une baguette 8. De plus, l'outil 6 permet de plaquer un élément 8 sur un support 10 de forme non plane. L'outil 6 est adaptable à la forme d'un support 10 grâce au joint d'étanchéité 20.

Cet outil 6 utilise la surface d'adhérence 34 du tronçon 32 de la baguette 8 de façon à obtenir la continuité de l'étanchéité pour permettre une dépression. Cet outil 6 permet donc de plaquer un élément 8 sur un support 10 qui a une limite surfacique (ouverture du panneau de porte) ne permettant pas de faire l'étanchéité autour de l'élément 8.

Pour monter une baguette 8 sur un panneau de porte 10, la surface d'adhérence 34 adhésive est positionnée, par des moyens de positionnement, sur la face extérieure 24 du panneau de porte 10. L'outil 6 est positionné de telle manière que la portion 28 du joint d'étanchéité 20 coopère avec le tronçon 32 de la baguette 8. L'outil 6 peut être positionné face au panneau de porte 10 à l'aide de poignées et peut être maintenu au moyen de bras sur le rebord de la fenêtre. L'opérateur effectue une dépression. La baguette 8 subit un effort sur son côté bombé 36 permettant sa fixation définitive de sa surface d'adhérence 34 adhésive sur la face extérieure 24 du panneau de porte 10.

L'élément 8 est alors collé de façon plus efficace et de façon plus sûre. Les risques de chute de l'élément sont limités considérablement. Cet outil 6 permet de plaquer un élément 8 efficacement avec une force qui est supérieure aux contraintes acceptables par le support 10. Le support 10 n'est donc pas détérioré.

Selon un autre mode de réalisation, le joint d'étanchéité 20 peut être dans une matière homogène ou la portion 28 du joint d'étanchéité 20 peut être dans une matière différente de celle du reste du joint d'étanchéité 20.

Selon un autre mode de réalisation, l'élément 8 à plaquer peut être un monogramme se prolongeant hors de l'outil.

Selon un autre mode de réalisation, l'outil 6 peut comporter plusieurs cadres agencés de la même façon que le cadre 14 précédemment décrit pour plaquer plusieurs éléments. Par exemple, deux cadres liés peuvent être utilisés pour plaquer deux baguettes latérales sur les deux panneaux de porte d'un côté d'un véhicule automobile 18 de part et d'autre de l'ouverture du panneau de la porte avant.

Selon un autre mode de réalisation, l'élément 8 à plaquer peut être emboîtable sur le support 10. La force effectuée par dépression permet d'emboîter l'élément 8 dans le support 10.

Selon un autre mode de réalisation, la matière de la portion 28 est choisie de telle façon que la portion 28 est déformable pour permettre la création du passage 30 lors de chaque utilisation de l'outil 6.

Selon un autre mode de réalisation, l'outil peut être modulaire. La portion du joint peut être remplacée par un joint obturant le passage 30 de telle manière que l'étanchéité soit complète pour utiliser l'outil avec des éléments qui ne se prolongent pas en dehors des limites du cadre 14 de l'outil 6.

## Revendications

1. Outil (6), pour plaquer par dépression un élément (8) sur un support (10), comportant un cadre (14) dont une surface continue fermée (22) coopère de manière étanche avec une face (24,26) du support (10), **caractérisé en ce que** la surface continue fermée (22) comporte un passage (30) qui épouse de manière étanche un tronçon (32) de l'élément (8) qui se prolonge en dehors des limites du cadre (14).

2. Outil (6), pour plaquer un élément (8) par dépression selon la revendication 1, **caractérisé en ce que** la surface continue fermée (22) est formée par un joint d'étanchéité (20).

3. Outil (6), pour plaquer un élément (8) par dépression selon la revendication 2, **caractérisé en ce qu'**au moins une portion (28) du joint d'étanchéité (20) comporte le passage (30) et est choisie parmi les matières plastiques tel qu'un silicone.

4. Outil (6), pour plaquer un élément (8) par dépression selon la revendication 3, **caractérisé en ce que** la portion (28) est modulaire.

5. Outil (6), pour plaquer un élément (8) par dépression selon l'une des revendications, **caractérisé en ce que** l'outil (6) comporte au moins deux parties se prolongeant de part et d'autre d'une limite surfacique telle qu'une ouverture de porte.

6. Outil (6), pour plaquer un élément (8) par dépression selon l'une des revendications 1 à 5, **caractérisé en ce que** l'élément (8) comporte une surface d'adhérence (34) adhésive.

7. Outil (6), pour plaquer un élément (8) par dépression selon l'une des revendications 1 à 5, **caractérisé en ce que** l'élément (8) comporte une surface d'adhérence (34) pourvue de moyens de clipsage.
